Europäisches Patentamt

**European Patent Office**

**Office européen des brevets**

(19)

(11) Numéro de publication: **0 076 189**
**B1**

(12) **FASCICULE DE BREVET EUROPEEN**

(45) Date de publication du fascicule du brevet:
**08.01.86**

(21) Numéro de dépôt: **82401674.5**

(22) Date de dépôt: **15.09.82**

(51) Int. Cl.⁴: **G 01 F 1/12,** G 01 F 1/10

(54) Perfectionnements aux appareils de mesure de débit à turbine axiale.

(30) Priorité: **30.09.81 FR 8118374**

(43) Date de publication de la demande:
**06.04.83 Bulletin 83/14**

(45) Mention de la délivrance du brevet:
**08.01.86 Bulletin 86/2**

(84) Etats contractants désignés:
**BE CH DE GB IT LI NL**

(56) Documents cités:
**DE - B - 1 279 355**
**FR - A - 2 080 762**
**US - A - 2 683 224**
**US - A - 2 709 366**
**US - A - 2 709 755**
**US - A - 3 091 964**
**US - A - 3 238 776**

(73) Titulaire: **FLONIC S.A., 12, Place des Etats-Unis,
F-92120 Montrouge (FR)**

(72) Inventeur: **Lett, Roland, 2, rue Léonard de Vinci,
F-91330 Yerres (FR)**

(74) Mandataire: **Dronne, Guy et al, Giers
Schlumberger 12 Place des Etats-Unis B.P. 121,
F-92124 Montrouge (FR)**

ACTORUM AG

## Description

La présente invention est relative aux appareils de mesure de débit de fluide à turbine axiale ou du type compteurs de Woltmann, dans lesquels la quantité de fluide s'écoulant dans une conduite est mesurée au moyen d'une turbine qui est montée coaxialement dans cette conduite et dont le nombre de tours est représentatif du débit instantané ou cumulé.

On sait que dans ce type d'appareils, le fluide exerce sur la turbine, notamment pour des débits importants, une poussée axiale hydrodynamique fonction du coefficient de trainée ($C_x$) des pales de la turbine et du carré du débit. A titre d'exemple, pour des débits de l'ordre de 500 m³/h, la poussée peut atteindre une valeur voisine de 12 da N dans une conduite de 150 mm de diamètre.

Cette poussée axiale a d'une part, l'inconvénient de diminuer la précision métrologique de l'appareil par la résistance de frottement accrue qu'elle contribue à exercer sur la rotation de la turbine et, d'autre part, des effects pratiques dommageables pour l'appareil qui se manifestent par une usure rapide du palier et de la butée aval de la turbine et entrainent une diminution de la durée de fonctionnement de l'appareil dont le remplacement des pièces défectueuses doit être effectué.

Il a déjà été proposé de nombreuses solutions pour essayer de compenser ou de limiter la poussée axiale sur la turbine de ce genre d'appareils, ces solutions étant généralement basées sur la création artificielle d'une contre-force tendant à encaisser la poussée axiale due à l'action du fluide et à limiter aussi le déplacement de la turbine. Les moyens mis en œuvre pour cette compensation utilisent par exemple un profilage particulier de l'ensemble de la turbine, des carénages à effet Venturi, des orifices de mise à pression prévus cans les carénages et/ou le moyeu de la turbine, etc. FR-A- 20 807 62 decrit un debit métre à turbine dans lequel les moyens de compensation de la poussée axiale sur la turbine comportent un passage ménagé dans le rotor de la turbine pour permettre au fluide de passer d'un côté à l'autre du rotor de ladite turbine. On peut en effet, par construction, amener le coefficient de trainée des pales de la turbine à une valeur désirée; cependant, les turbines venant souvent directement de moulage, il se produit une dispersion en fabrication faisant que le coefficient de trainée n'a pas toujours la valeur souhaitée; il en résulte que la correction de poussée est réalisée pour une valeur de débit qui n'est pas toujours la même pour tous les appareils, et le problème posé ne reste qu'imparfaitement résolu.

L'invention vise à remédier aux inconvénients énoncés précédemment en fournissant des moyens capables de réaliser, à la manière d'un asservissement, un véritable équilibrage dynamique de la poussée axiale subie par la turbine d'un compteur de Woltmann dans une gamme étendue de débits.

L'appareil, suivant l'invention, comporte dans un élément de conduite tubulaire prévu pour être parcouru par un fluide à mesurer se trouvant à une certaine pression, une turbine portant des pales à la périphérie d'un moyeu cylindrique et montée à rotation de façon axialement mobile entre deux carénages fixes, l'un amont et l'autre aval, des moyens pour créer une zone de dépression de valeur approximativement constante quelle que soit la position axiale du moyen du côté de la face transversale de l'extrémité amont du moyen, ledit carénage aval comprenant une partie cylindrique creuse dans laquelle pénètre avec jeu l'extrémité aval dudit moyen pour obtenir du côté de la face transverale de l'extrémité aval du moyen une zone de surpression de telle sorte que la poussée hydrodynamique sur la turbine résultant de l'écoulement du fluide est constamment équilibrée par la différence entre ladite surpression et ladite dépression, caractérisé en ce que ladite extrémité aval du moyen présente une augmentation de diamètre par rapport au reste dudit moyen, la conjugaison des profils relatifs de l'extrémité aval élargie du moyen et du carénage aval définissant ladite surpression de telle manière qu'elle diminue lorsque ledit moyen se déplace axialement vers ledit carénage amont.

Les moyens pour créer du côté de la face amont du moyeu de la turbine une zone de dépression de valeur approximativement constante peuvent comporter à l'extrémité aval du carénage amont une partie cylindrique creuse dans laquelle s'engage partiellement le moyeu de la turbine, quelle que soit la position axiale de celle-ci; l'élargissement brusque de la section de passage annulaire à l'aplomb du moyeu provoque alors un décollement de la veine fluide avec établissement d'une dépression à l'intérieur de ce carénage amont indépendante de la position axiale de la turbine.

La turbine est ainsi soumise, d'une part à la poussée hydrodynamique qui s'exerce sur ses pales, d'autre part à deux forces antagonistes agissant de part et d'autre de son moyeu et résultant des pressions locales différentes qui existent sur ses faces de surfaces respectives aussi différentes. Moyennant un dimensionnement convenable des faces transversales du moyeu, il s'établit ainsi pour chaque débit un équilibre dinamique auquel correspond une position bien définie de la turbine le long de son axe, et on réalise finalement un asservissement stable de la position de la turbine au débit de fluide passant dans l'élément de conduite. A titre d'exemple, la position de la turbine varie dans un intervalle de l'ordre de 2,5 mm pour un débit allant de 3 m³/h à 500 m³/h dans une conduite de 150 mm, mais surtout la poussée axiale ne s'exerce plus sur le palier et la butée aval les inconvénients et dommages précédemment signalés.

D'autres avantages et caractéristiques de l'invention ressortiront de la description qui va suivre en relation avec le dessin annexé donné à titre d'exemple non limitatif d'un mode de réalisation préféré de l'invention. Sur ce dessin:

– la fig. 1 représente schématiquement en coupe axiale un compteur de Woltmann conforme à l'invention montrant en demi-coupes supérieure et inférieure la turbine dans deux positions de fonctionnement.

— la fig. 2 est un diagramme représentant la variation de la différence des pressions de part et d'autre du moyeu de la turbine en fonction de sa position axiale à plusieurs débits.

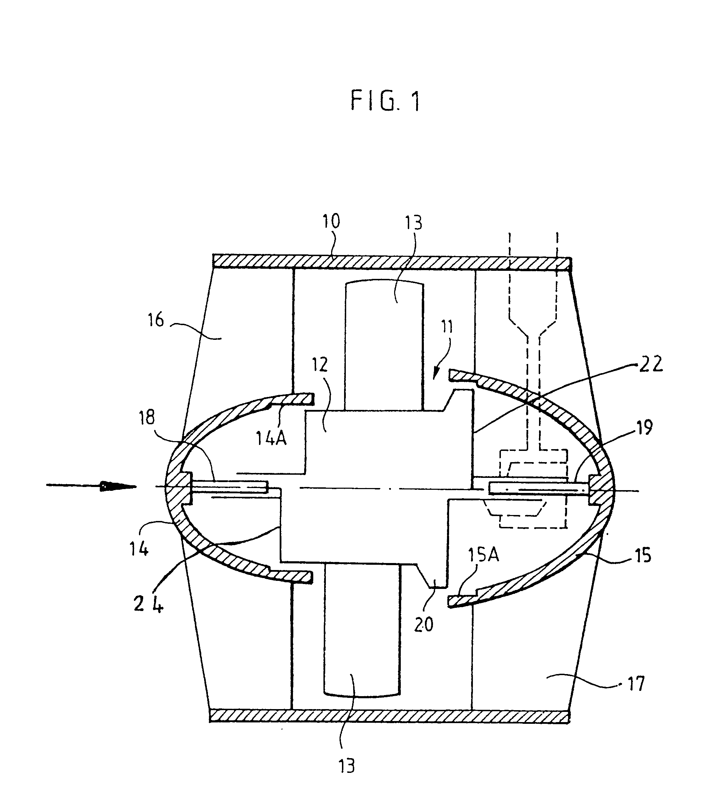

En se référant à la fig. 1, on voit dans un élément de conduite tubulaire 10, une turbine 11 constituée par un moyeu 12 de forme générale cylindrique muni à sa périphérie d'ailettes 13 inclinées sur l'axe de la conduite. La turbine 11 est montée à rotation de façon usuelle entre deux carénages creux, l'un amont 14 et l'autre aval 15, le fluide à mesurer parcourant, en fonctionnement, l'élément tubulaire 10 suivant le sens de la flèche. Les carénages 14, 15 sont reliés à l'élément 10 par des nervures sensiblement radiales 16, 17 respectivement et portent intérieurement des arbres 18, 19 coaxiaux à l'élément 10 et prévus pour se loger dans des alésages axiaux pratiqués aux extrémités du moyeu 12 de la turbine, permettant à celle-ci, d'une part de tourner librement autour de l'axe de l'élément 10, d'autre part de se déplacer axialement le long de cet axe. Une butée aval, par exemple à bille, est normalement montée dans l'alésage de l'arbre 19 mais n'a pas été représentée.

Leu moyeu 12 est muni à son extrémité aval d'une vis sans fin qui engrène avec un pignon (figurés en traits interrompus) calé sur l'arbre de sortie du compteur et relié extérieurement à des moyeux de totalisation et d'affichage du nombre de tours effectués par la turbine.

Le carénage amont 14 présente intérieurement à son extrémité aval une partie cylindrique droite 14A dans laquelle s'engage la partie cylindrique de l'extrémité amont du moyeu 12 de la turbine au cours de ses déplacements axiaux.

Le moyeu 12 présente à son extrémité aval une zone 20 de plus grand diamètre que dans sa partie cylindrique droite, et le carénage aval 15 présente aussi à son extrémité amont une partie cylindrique droite 15A dans laquelle peut s'engager la zone élargie 20 du moyeu 12 au cours des déplacements axiaux de la turbine 11.

Les jeux radiaux existant entre les éléments 12 et 14A et entre les éléments 20 et 15A respectivement sont, à titre d'exemple dans une conduite de 150 mm, de l'ordre du millimètre.

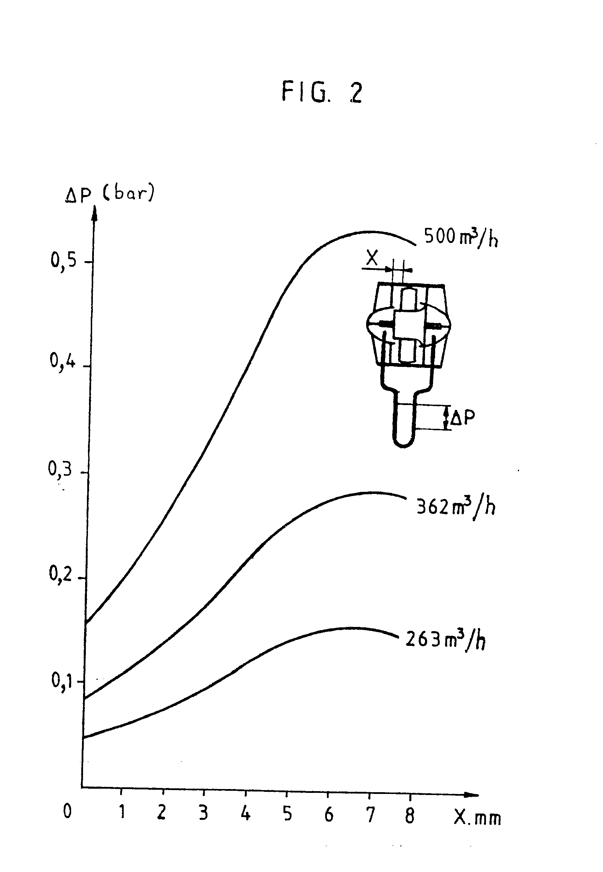

Le fonctionnement du compteur décrit ci-dessus va maintenant être exposé en relation avec la fig. 2 sur laquelle ont été tracées des courbes représentant à différents débits, la différence $\Delta$ p (en bar) entre les pressions s'exerçant sur les faces transversales planes aval et amont du moyeu de la turbine en fonction de la position axiale x de celle-ci par rapport à une position prise comme référence. On a choisi dans cet exemple une conduite de 150 mm de diamètre.

En l'absence de débit de fluide dans la conduite, la turbine occupe une position axiale indifférente. On suppose par exemple qu'elle se trouve dans la position représentée fig. 1 sur la moitié supérieure. Quand le fluide commence à s'écouler et que le débit ne dépasse pas 3 m³/h, la poussée axiale qu'il exerce sur les ailettes de la turbine a pour effet de l'amener en butée aval. Etant donné le faible débit, les effets hydrodynamiques développés sont insuffisants pour créer de part et d'autre du moyeu une différence de pression capable de s'opposer à la poussée du fluide sur la turbine, mais cette poussée est elle-même trop faible pour endommager la butée aval de la turbine.

Le débit de fluide continuant à augmenter, le décollement de la veine fluide à l'aplomb de l'extrémité aval du carénage amont 14 crée dans cette zone une dépression qui s'exerce aussi à l'intérieur du carénage amont 14. Au contraire, l'obstacle à l'écoulement du fluide formé par la périphérie de l'extrémité amont du carénage aval 15 autour de l'extrémité aval du moyeu 12 crée dans ce carénage 15 une surpression locale. La dépression dans le carénage amont 14 d'une part, la surpression dans le carénage aval 15 d'autre part, qui, elle, agit sur une face du moyeu de plus grand diamètre, donnent ainsi naissance à une force de réaction dirigée vers l'amont. Cette force, proportionnelle à la différence de pression $\Delta$ p et à la section du moyeu 12, est supérieure à la trainée des ailettes 13 de la turbine pour le débit considéré moyennant un dimensionnement adéquat du diamètre du moyen 12 par rapport au maître-couple et au coefficient de trainée ($C_x$) de la turbine. La force de réaction étant plus élevée que la trainée. la turbine a tendance à remonter vers l'amont. Cependant, pendant ce déplacement, la différence de pression $\Delta$ p diminue, comme l'indique les courbes de la fig. 2, du fait que la surpression dans le carénage aval 15 diminue au fur et à mesure que la zone 20 du moyeu 12 tend à sortir de la partie cylindrique 15A du carénage 15. La différence de pression $\Delta$ p diminue donc en même temps que la position x de la turbine, et par voie de conséquence, la force de réaction du moyeu 12 diminue elle aussi. La turbine se déplace donc vers l'amont jusqu'à ce qu'il s'établisse un équilibre entre la force de réaction du moyeu 12 et la trainée des ailettes de la turbine pour une position dans laquelle la turbine se stabilise. Comme l'ensemble des paramètres: trainée des ailettes de la turbine, dépression dans le carénage amont, surpression dans le carénage aval, qui interviennent dans ce processus sont des éléments dont les valeurs répondent à la loi quadratique des débits, cette position d'équilibre de la turbine, définie pour un débit donné, reste théoriquement la même quel que soit le débit considéré. En pratique, on constate que les changements de régime d'écoulement peuvent déplacer légèrement la position d'équilibre théorique dans un faible intervalle, de l'ordre de 2,5 mm, pour une large gamme de débits.

Moyennant un dimensionnement convenable des faces transversales du moyeu 12, on obtient finalement un équilibrage des forces axiales qui agissent en sens inverse sur la turbine: poussée hydrodynamique d'une part, contreforce résultant des pressions différentes agissant sur les faces transversales du moyeu d'autre part. Les courbes de débit indiquées fig. 2 montrent qu'il existe sur chaque courbe une zone rectiligne croissant dans laquelle une variation de x à débit constant se traduit par une variation proportionnelle de Δ p de sorte que autour d'un point de fonctionnement, par exemple x = 3 mm, il s'établit une sorte d'asservissement stable de la position de la turbine à l'intérieur d'un intervalle de l'ordre du mm.

A chaque débit correspond ainsi une position axiale quasi-stable de la turbine et on a pu constater que l'abscisse x de cette position variait relativement peu dans un intervalle de l'ordre de 2,5 à 3 mm pour une gamme de débits variant de 3 m³/h à 500 m³/h dans l'exemple choisi d'une conduite de 150 mm.

La réalisation d'un tel asservissement en position axiale moyenne de la turbine offre donc le double avantage de supprimer toute action dommageable de la poussée hydrodynamique du fluide sur les éléments de palier aval de la turbine qui ne sont jamais soumis à des efforts importants, et d'obtenir une meilleure précision métrologique de la turbine en la faisant fonctionner dans des positions normales sans frottement.

La fig. 1 a été volontairement représentée de façon schématique et simplifiée pour faciliter l'exposé du principe sur lequel repose le fonctionnement du compteur selon l'invention. Il est entendu que, pratiquement, l'élément tubulaire renfermant la turbine peut être muni de brides à ses extrémités pour le raccorder à la conduite parcourue par le fluide à mesurer et que la structure du compteur prévoit normalement une ouverture latérale sur l'élément tubulaire, fermée par un couvercle contenant le totalisateur et à travers laquelle la turbine peut être montée entre ses deux carénages et ces derniers assemblés à l'intérieur de cet élément. Ce mode de montage connu n'a pas été représenté et ne fait pas partie de l'invention. De même la sortie du compteur fournissant l'information relative au nombre de tours de la turbine n'est pas nécessairement réalisée sous forme mécanique et peut être obtenue de façon différente, par exemple électromagnétique, photoélectrique, etc... au moyen d'un capteur approprié.

L'invention est applicable aux appareils de mesure de débits de fluide en général, et notamment aux compteurs d'eau de gros calibres.

**Revendications**

1. Appareil de mesure de débit de fluide comportant, dans un élément (10) de conduite tubulaire prévu pour être parcouru par un fluide à mesurer se trouvent à une certaine pression, une turbine (11) portant des pales (13) à la périphérie d'un moyeu (12) cylindrique et montée à rotation de façon axialement mobile entre deux carénages (14, 15) fixes, l'un (14) amont l'autre (15) aval, des moyens pour créer une zone de dépression de valeur approximativement constante quelle que soit la position axiale du moyeu du côté de la face (24) transversale de l'extrémité amont du moyeu (12), ledit carénage (15) aval comprenant une partie (15a) cylindrique creuse dans laquelle pénètre avec jeu l'extrémité aval dudit moyeu pour obtenir du côté de la face (22) transversale de l'extrémité (20) aval du moyeu (12) une zone de surpression de telle sorte que la poussée hydrodynamique sur la turbine (11) résultant de l'écoulement du fluide est constamment équilibrée par la différence (Δ p) entre ladite surpression et ladite dépression, caractérisé en ce que ladite extrémité (20) aval du moyeu (12) présente une augmentation de diamètre par rapport au reste dudit moyeu, la conjugaison des profils relatifs de l'extrémité aval élargie du moyeu (12) et du carénage (15) aval définissant ladite surpression de telle manière qu'elle diminue lorsque ledit moyeu se déplace axialement vers ledit carénage (14) amont.

2. Appareil suivant la revendication 1, caractérisé en ce que les faces transversales des extrémités aval (22) et amont (24) ont des diamètres relatifs dimensionnés pour que la différence (Δ p) entre ladite surpression et ladite dépression varie, pour une valeur du débit, de façon sensiblement rectiligne, en fonction de la position axiale (x) du moyeu (12).

**Patentansprüche**

1. Durchflussmessgerät für ein fluides Medium, welches in einem rohrförmigen, von dem unter einen bestimmten Druck stehenden zu messenden fluiden Medium zu durchströmenden Leitungselement (10) eine Turbine (11) aufweist, die am Umfang einer zylindrischen Nabe (12) Flügel (13) trägt und drehbar sowie axial beweglich gelagert ist zwischen zwei feststehenden Verkleidungen (14, 15), von denen die eine (14) strömungsaufwärts und die andere (15) strömungsabwärts angeordnet ist, und Mittel aufweist, um eine Zone mit einem Unterdruck von annähernd konstantem Wert unabhängig von der Axialstellung der Nabe auf der Seite der Querfläche (24) des strömungsaufwärts liegenden Endes der Nabe (12) zu erzeugen, wobei die genannte strömungsabwärts liegende Verkleidung (15) einen hohlzylindrischen Teil (15a) umfasst, in welchen das strömungsabwärts liegende Ende der genannten Nabe mit Spiel eindringt, um auf der Seite der Querfläche (22) des strömungsabwärts liegenden Endes (20) der Nabe (12) eine Überdruckzone zu erhalten, so dass die hydrodynamische Schubkraft auf die Turbine (11), welche aus der Strömung des fluiden Mediums resultiert, stets durch die Differenz (ΔP) zwischen dem genannten Überdruck und dem genannten Unterdruck ausgeglichen wird, dadurch gekennzeichnet, dass das genannte strömungsabwärts liegende Ende (20) der Nabe (12) eine Durchmesservergrösserung gegenüber dem übrigen Teil der genannten Nabe aufweist, wobei die Kombination der Relativprofile des strömungsabwärts liegenden verbreiterten Endes der Nabe (12) und der strömungsabwärts liegenden Verkleidung (15) den genannten Überdruck derart bestimmt, dass er abnimmt, wenn die Nabe sich in Axialrichtung gegen die strömungsaufwärts liegende Verkleidung (14) bewegt.

2. Gerät nach Anspruch 1, dadurch gekennzeichnet, dass die Querflächen der strömungsaufwärts (22) und strömungsabwärts (24) liegenden Enden Relativdurchmesser aufweisen, die derart bemessen sind, dass die Differenz ($\Delta p$) zwischen dem genannten Überdruck und dem genannten Unterdruck sich für einen Wert des Strömungsdurchsatzes im wesentlichen geradlinig in Abhängigkeit von der Axialstellung (x) der Nabe (12) verändert.

## Claims

1. Apparatus for measuring the flow rate of a fluid comprising in a tubular conduit member (10) adapted to be traversed by a fluid to be measured, said fluid being at a pressure, a turbine (11) carrying blades (13) at the periphery of a cylindrical hub (12) rotatably mounted and axially movable between two fixed fairings, one upstream (14) and the other downstream (15), means for creating a zone of reduced pressure of approximately constant value irrespective of the axial position of the hub, beside the transverse face of the upstream end of the hub, said downstream fairing (15) cormprising a hollow cylindrical portion (15a) wherein the downstream end of said hub extends with clearance for creating beside the transverse face (22) of the downstream end (20) of the hub (12) a zone of increased pressure in such a manner that the hydraulic pressure on the turbine arising from the flow of fluid is continously balanced by the difference ($\Delta p$) between said increased pressure and reduced pressure, characterised in that said downstream end (20) of the hub (12) has an increased diameter compared with the remaining portion of said hub, the combination of the relative profiles of the enlarged downstream end of the hub and the downstream fairing (15) defining said increased pressure so that said pressure is decreased when said hub is axialy moved towards said upstream fairing.

2. Apparatus according to claim 1, characterised in that said transverse faces of the downstream and upstream ends have relative diameter dimensioned so that the difference ($\Delta p$) between said increased pressure and reduced pressure, varies for a value of the flow rate, substantially linearly as a function of the axial position of the hub (12).

FIG. 1

FIG. 2